# EUROPÄISCHE PATENTSCHRIFT

(11) **EP 0 802 513 B1**
(45) Veröffentlichungstag und Bekanntmachung des Hinweises auf die Patenterteilung: **30.01.2002**
(21) Anmeldenummer: 97106343.3
(22) Anmeldetag: 17.04.1997
(51) Int. Cl.: G07B 1/00, G07F 7/08

(54) **Vorrichtung zur Erhebung von Strassenbenutzungsgebühren**
Device for charging road tolls
Dispositif pour lever péages

(30) Priorität: 20.04.1996 DE 19615834; 23.12.1996 DE 19654847
(43) Veröffentlichungstag der Anmeldung: 22.10.1997
(60) Teilanmeldung: 01105996.1
(73) Patentinhaber: GSI Gesellschaft für Systemtechnik und Informatik mbH, 88682 Salem (DE)
(72) Erfinder: Dünhaupt, Rolf, 88682 Salem (DE)
(74) Vertreter: Patentanwälte Eisele, Otten, Roth & Dobler

(56) Entgegenhaltungen:
- EP-A- 0 262 768
- EP-A- 0 461 927
- WO-A-88/01818
- CH-A- 669 687
- DE-A- 3 113 175
- GB-A- 2 172 731
- US-A- 4 381 705

## Beschreibung

Die Erfindung betrifft eine Vorrichtung zur Erhebung von Straßenbenutzungsgebühren nach dem Oberbegriff des Anspruchs 1.

In der Schweiz werden seit längerer Zeit Straßenbenutzungsgebühren erhoben, indem eine Vignette für Kraftfahrzeuge verkauft wird, die an der Windschutzscheibe im Innenraum des Fahrzeugs anzubringen ist. Diese Vignette hat eine Gültigkeit über einen bestimmten Zeitraum, d.h. über ein Jahr.

Mit der Druckschrift CH 669 687 wurde eine solche Vignette sowie eine Vorrichtung zur automatischen Detektion der Vignette vorgeschlagen.

Weiterhin sind verschiedene Vorrichtungen mit unterschiedlichem Automatisierungsgrad zur Erstellung und Ausgabe von Fahrscheinen bekannt geworden (vgl. DE 31 13 175, 43 81 705, EP 461 927, EP 262 768).

Ferner sind mit den Druckschriften GB 2 172 731 und WO 88/01818 Verkaufsautomaten bzw. Transaktionssysteme bekannt geworden, die eine Identifizierung einer Karte, beispielsweise einer Chip-Karte, zur Sicherheitskontrolle vorsehen.

Alle diese Vorrichtungen befassen sich jedoch nicht mit der Erhebung von Straßenbenutzungsgebühren.

In verschiedenen Ländern werden für bestimmte Straßenabschnitte, beispielsweise für Autobahnen oder Tunneldurchfahrten, Mautgebühren erhoben, bei denen zu Beginn des jeweiligen Streckenabschnitts eine Zahlstelle eingerichtet ist, an der die Mautgebühr entrichtet und ein entsprechender Beleg ausgegeben wird.

Seit 01. Januar 1995 werden in der Bundesrepublik Deutschland Autobahngebühren für deutsche und ausländische Lastkraftwagen erhoben. Seitdem ist die Benutzung sämtlicher Autobahnen mit Lastkraftwagen, die ausschließlich für den Güterkraftverkehr bestimmt sind und ein zulässiges Gesamtgewicht von mindestens 12 Tonnen haben, gebührenpflichtig. Der Nachweis über die Entrichtung der Gebühr wird über eine fahrzeugbezogene Bescheinigung erbracht, die der LKW-Fahrer ständig mitzuführen hat.

Diese Bescheinigung muss einerseits eine größtmögliche Sicherheit gegenüber Fälschungen gewährleisten, jedoch andererseits möglichst unkompliziert an einem breiten flächendeckenden Netz von Abgabestellen zu erwerben sein. Hierzu erfolgt der Verkauf der Bescheinigungen an zentralen, für den LKW-Verkehr leicht erreichbaren Stellen, z.B. Tankstellen, Raststätten, Betriebshöfen etc. Nicht nur im Inland, sondern auch in Grenznähe im Ausland sind verkehrsgünstig gelegene Verkaufsstellen eingerichtet worden.

Verschiedene Länder, insbesondere Dänemark, Belgien, Luxemburg und die Niederlande haben einen Verbund mit Deutschland gebildet bzw. die Absicht hierzu erklärt, ebenfalls eine entsprechende Autobahngebühr zu erheben und eine Sammelbescheinigung für den gesamten Verbund vorzusehen.

Die Gebührenbescheinigungen werden an den Bescheinigungsabgabestellen mittels eines Gebührenerhebungsgeräts erstellt. Diese Geräte umfassen jeweils ein Terminal, das über Datenleitungen zumindest zeitweise mit einem Zentralrechner verbunden ist, in dem eine zentrale Auswertung der vorgenommenen Transaktionen durchgeführt wird. Das Gebührenerhebungsgerät beinhaltet unter anderem ein Kompaktterminal wie oben angeführt mit Hybrid-Kartenleser (Magnetkarten- und Chipkartenleser), eine Tastatur, ein Display, einen Drucker für die Gebührenbescheinigung, ein Modem mit Postzulassung sowie eine Gerätehalterung mit abschließbarem Papierfach für die Bescheinigungsvordrucke.

Sowohl an die Gerätekonstruktion als auch an den Ausdruck der Bescheinigungen sowie an die Weiterleitung der Daten der vorgenommenen Transaktionen sind hohe Sicherheitsanforderungen zu stellen, da durch einen Missbrauch erhebliche Geldmengen unterschlagen werden können.

Die Gebührenerhebungsgeräte werden von einem Bedienpersonal der Gebührenbescheinigungsstellen bedient. Damit kein Unbefugter die Gebührenerhebungsgeräte missbräuchlich verwenden kann, muss sich eine Bedienperson mittels einer Bedienerkarte identifizieren, bevor sie das Gebührenerhebungsgerät in Betrieb nehmen kann. Diese Bedienerkarten sind mit einem Magnetstreifen ausgestattet, der in dem Kartenleser des Kompaktterminals gelesen wird.

Aufgabe der Erfindung ist es, eine Vorrichtung vorzuschlagen, die eine flexiblere Erhebung von Straßenbenutzungsgebühren ermöglicht.

Dies wird erfindungsgemäß ausgehend von einer Vorrichtung der einleitend genannten Art durch die Merkmale des Anspruchs 1 erreicht.

Durch die in den Unteransprüchen genannten Maßnahmen sind vorteilhafte Ausführungen und Weiterbildungen der Erfindung möglich.

Erfindungsgemäß wird das Terminal zur Ausgabe von Gebührenbescheinigungen mit einer oder mehreren Datenbanken verbunden, die Daten über das zu erfassende Straßennetz, Fahrzeugdaten gebührenpflichtiger Fahrzeuge und/oder Gebührendaten enthält.

Hiermit ist es möglich, streckenabhängige und fahrzeugspezifische Gebühren zu erheben. Dieser Vorteil kann bei unterschiedlichen Vorrichtungen zur Erhebung von Straßenbenutzungsgebühren benutzt werden.

Als fahrzeugspezifische Daten kommen bspw. die Achszahl, das Gesamtgewicht, der Federungstyp, die Motorleistung, die Abgasemission, die Lärmemission und vieles andere mehr in Frage.

Da der Fahrer des Fahrzeugs häufig über derartige Parameter nicht Bescheid weiß, können diese Parameter aufgrund der vorhandenen Datenbank abgerufen werden, sobald eine Kennung des Fahrzeugtyps durch eine Eingabe erfolgt ist. Der Fahrzeugtyp kann bspw. durch die Fahrzeugnummer im Kraftfahrzeugschein oder andere Kürzel, bspw. in Form von Versicherungsnummern usw. eingegeben werden.

Als streckenabhängige Parameter kommen bspw. Straßenkategorien in Frage, in denen das von der jeweiligen Straße zu bewältigende Verkehrsaufkommen, die Anzahl zu durchfahrender Ortschaften, die Beschaffenheit der zu durchfahrenden Landschaft, bspw. unter ökologischen Gesichtspunkten, usw. verwendet werden.

Als Gebührendaten stehen die für jeweilige Streckenabschnitte und Fahrzeugtypen zu verwendenden Gebühren zur Verfügung.

In einer vorteilhaften Ausführungsform werden die Gebühren zudem zeitabhängig und abhängig von der Art der Ladung, insbesondere bei Lastkraftwagen, bestimmt.

Durch die wenigstens teilweise Verwertung der oben angeführten Daten zur Bestimmung einer Straßenbenutzungsgebühr ist es möglich, bestimmte Arten von Verkehrsaufkommen gezielt zu steuern. So kann bspw. Gefahrgut durch ökologisch weniger sensible Landschaften oder durch wenig bevölkerte Gebiete geleitet werden. Zeitabhängig können bspw. Stoßzeiten in bestimmten Bereichen des Streckennetzes berücksichtigt werden, um eine Verlagerung auf weniger befahrene Straßen zu erzielen. Weitere Beispiele zum steuernden Eingriff in die Benutzung des Straßennetzes mittels eines Gebührensystems der beschriebenen Art sind ohne weiteres denkbar.

Kombinationen der verschiedenen Parameter zur Ermittlung einer Gebührenklasse sind ebenfalls denkbar. So könnte bspw. erreicht werden, dass Transporte gefährlicher Ladungen durch Landschaftsschutzgebiete mit besonders hohen Gebühren belastet werden.

Die notwendigen Eingaben zur Erstellung einer Gebührenbescheinigung müssen aus praktischen Gründen so weit wie möglich reduziert werden. Bei der Erfindung genügt die Angabe des Startortes, der zudem als sogenannter Defaultwert vorgegeben werden kann. Dieser Wert wird bevorzugt überschreibbar vorgegeben, so dass an jedem Terminal für jede beliebige Strecke eine Gebührenbescheinigung erstellt werden kann.

Für streckenabhängige Gebühren kann optional eine Fahrzeugsroute durch Angabe von einem oder mehreren zu durchfahrenden Ortsnamen oder sonstiger Routenkennzeichnungen eingegeben werden. Der Fahrzeugtyp ergibt sich, wie oben angeführt, aus einem Kürzel, bspw. der Fahrzeugnummer aus dem Kraftfahrzeugschein. Eine weitere Eingabe besteht in der Angabe des Fahrzeugkennzeichens für spätere Kontrollen. Weiterhin muss im Güterverkehr die Gefahrgutklasse sowie die zeitliche Gültigkeit eingegeben werden. In einer vorteilhaften Ausführungsform kann die zeitliche Gültigkeit vom Terminal auch automatisch abhängig von der gewählten Fahrtstrecke ermittelt und verwendet werden.

Aufgrund der vorhandenen Datenbank sind außer der Eingabe des Fahrzeugtyps keine weiteren Angaben über spezielle Eigenschaften des verwendeten Fahrzeugs einzugeben, da diese Information der Datenbank entnommen werden kann.

Der Routenverlauf wird vorzugsweise auf der Bescheinigung mit ausgedruckt, so dass eine einfache Kontrolle (ähnlich wie bei Bahnfahrkarten) möglich ist. Eventuelle notwendige Zuzahlungen bei verlassen der Route können über Mobilgeräte direkt erfasst und eingezogen werden.

In einer bevorzugten Ausführungsform wird die Datenbank bzw. werden die Datenbanken lokal an jedem Terminal vorgesehen. Es wäre jedoch auch denkbar, alle Terminal über einen Online-Zugriff auf eine zentrale Datenbank mit den notwendigen Informationen zu versehen, wobei in diesem Fall das Zeitproblem für die notwendigen Abfragen zu lösen ist.

Im Falle lokaler Datenbanken ist ein schneller Datenzugriff möglich. Eine kostengünstige Möglichkeit zur Bereitstellung einer lokalen Datenbank mit schnellen Zugriffszeiten stellt erfindungsgemäß die Verwendung eines Compactdisk-Laufwerks (CD-ROM) dar. Zudem kann in diesem Fall über einfaches Wechseln der entsprechenden Compactdisk die Datenbank schnell und einfach auf den jeweils aktuellsten Stand gebracht werden.

In einer besonders vorteilhaften Ausführungsform der Erfindung wird die Betriebssoftware des Terminals auf dem gleichen Datenträger wie die Datenbank bzw. die Datenbanken der oben angeführten Parameter abgelegt. Somit kann mit jeder Aktualisierung der Datenbank zugleich die Software des Gebührenerhebungsgeräts aktualisiert werden.

Weiterhin ist mit Hilfe eines CD-ROMS eine problemlose Aufrüstung vorhandener Gebührenerhebungsgeräte möglich.

In einer vorteilhaften Ausführungsform werden Mittel zur Initialisierung eines Gebührenerhebungsgeräts zu bestimmten Anlässen vorgesehen. Ein derartiger Initialisierungsvorgang kann beispielsweise für einen Tagesabschluss, einen Schichtwechsel des Bedienpersonals, nach einem Stromausfall, nach einem bestimmten Zeitintervall ohne Benutzung der Gebührenerhebungsstelle oder ähnlichen Anlässen vorgesehen werden.

Erfindungsgemäß umfassen die Initialisierungsmittel Kenndaten für jede Gebührenerhebungsstelle sowie für die entsprechende Bedienerkarte bzw. die entsprechenden Bedienerkarten. Weiterhin sind Mittel zur Erkennung einer Zuordnung der Kenndaten jeder Gebührenerhebungsstelle zu den Kenndaten einer oder mehrerer Bedienerkarten vorgesehen, wobei Mittel zur Herstellung dieser Zuordnung von Kenndaten im Zentralrechner vorgesehen sind.

Vorteilhafterweise wird die Zuordnung der genannten Kenndaten von Gebührenerhebungsgerät und Bedienerkarte im Zentralrechner erst bei der erstmaligen Inbetriebnahme eines Gebührenerhebungsgeräts vorgenommen. Auf diese Weise können eine Vielzahl von Bedienerkarten und Gebührenerhebungsgeräten in Umlauf gebracht werden, wobei außer zulässigen Testläufen kein Missbrauch möglich ist. Erst nach der ersten Inbetriebnahme, d.h. nach der Zuordnung der Kenndaten bestimmter Bedienerkarten mit den Kenndaten der entsprechenden Gebührenerhebungsgeräten wird es möglich, die Gebührenerhebungsgeräte so zu initialisieren, dass die oben genannten Buchungen und Bescheinigungen vorgenommen werden können.

In einer besonderen Ausführungsform wird die Zuordnung der Kenndaten dadurch bewirkt, dass bei der Erstinbetriebnahme eines Gebührenerhebungsgeräts eine vorcodierte Bedienerkarte in das entsprechende Terminal eingesteckt wird. Die Kenndaten der Bedienerkarte werden anschließend vom Gebührenerhebungsgerät an den Zentralrechner übermittelt. Dieser generiert nach einem bestimmten Algorithmus hieraus Kenndaten für eine Terminalidentität. Diese Terminalidentität wird sodann in den Speicher des Gebührenerhebungsgeräts geladen. Das Terminal ist in der Lage, aufgrund der so generierten Terminalidentität und den Kenndaten der Bedienerkarte die für eine Initialisierung geforderte Zuordnung zu erkennen. Somit kann fortan das Gebührenerhebungsgerät vor Ort im Offline-Betrieb, d. h. ohne Verbindungsaufnahme zum Zentralrechner, durchgeführt werden.

Denkbar wäre in einer anderen besonderen Ausführungsform die Möglichkeit, die Gebührenerhebungsgeräte so auszubilden, dass eine Zuordnung der Kenndaten im Offline-Betrieb unterbunden ist. In diesem Fall findet die Zuordnung der Kenndaten allein im Zentralrechner statt. Einerseits wird hierdurch die Sicherheit weiter erhöht, jedoch ergibt sich hierdurch andererseits die Notwendigkeit der Verbindungsaufnahme zwischen Terminal und Zentralrechner bei jeder Initialisierung. Insbesondere bei Mobilteilen erhöht sich hierdurch der Aufwand, da die Datenübertragung hierbei drahtlos erfolgen muss und zugleich eine unbedingte Abhör- und Fälschungssicherheit gewährleistet sein muss.

Ein weiterer Sicherheitsfaktor lässt sich in einer besonderen Ausführungsform dadurch erreichen, dass in der Kommunikation zwischen den Terminals und dem Zentralrechner ein sogenanntes Master-Slave-Prinzip strikt eingehalten wird. Dies bedeutet, dass ein Terminal, eventuell mit Ausnahme des Aufbaus der Verbindung zum Zentralrechner, keinerlei Initiative gegenüber dem Zentralrechner ergreifen kann. Jede Aktion des Terminals (slave) wird vom Zentralrechner (master) eingeleitet.

Dies bietet eine erhöhte Sicherheit, falls es einer nichtberechtigten Bedienperson bei einem missbräuchlichen Versuch gelingen sollte, ein Terminal über das Modem aufzurufen. In diesem Fall werden vom Terminal keine Daten, die wie bereits erwähnt, einen hohen Geldwert bedeuten können, abgegeben. Eine Grundvoraussetzung, um Daten von einem Terminal abzufragen, ist die Kenntnis der Telegrammstruktur, die zur Kommunikation zwischen den Terminals und dem Zentralrechner eingerichtet ist.

Ein weiterer Vorteil des Master-Slave-Prinzips besteht darin, dass in Zeiten verstärkten Online-Betriebs, d. h. in Zeiten einer großen Auslastung des Zentralrechners in Bezug auf die Kommunikation mit verschiedenen Terminals, Hostrechnern etc., der Zentralrechner seine diesbezügliche Belastung selbst regeln kann. Er kann beispielsweise einem Terminal, das in Verbindung mit ihm tritt, die Anweisung geben, die Verbindung abzubrechen, die Anzahl der zu übermittelnden Transaktionen beschränken, wobei die beim Terminal verbliebenen gebuchten Transaktionen zu einem späteren Zeitpunkt auszulesen sind, und insgesamt seine zeitliche Auslastung in der Kommunikation mit den Terminals kontrollieren.

Auch bei einem Defekt im Zentralrechner bietet dieses Prinzip die Sicherheit, dass keine Daten verloren gehen, die ansonsten gegebenenfalls von einem Terminal abgesandt würden, jedoch im Zentralrechner unter Umständen nicht erfasst würden. Daten werden somit nur übertragen, wenn der Zentralrechner aufnahmebereit ist.

Da die fertigen Gebührenbescheinigungen zum Teil einen erheblichen Wert darstellen können, wird für den Ausdruck der Gebührenbescheinigungen vorzugsweise ein Papiervordruck in fälschungssicherer Ausführung, ähnlich wie bei Geldscheinen verwendet. Um einen Missbrauch mit derartigen Vordrucken auszuschließen, wird vorteilhafterweise ein geschlossenes Gehäuse für das Gebührenerhebungsgerät vorgesehen, d.h. sowohl der Papierschacht als auch die Papierzuführung zum Drucker wird vorzugsweise über eine verschließbare Klappe gegen eine unberechtigte Entnahme derartiger Papiervordrucke gesichert.

Aus Kostengründen empfiehlt es sich, herkömmliche Drucker in dem Gebührenerhebungsgerät zu verwenden. Dabei ist es aus Sicherheitsgründen vorteilhaft, Mittel vorzusehen, mittels denen der Drucker nach dem Ausdruck einer Gebührenbescheinigung ausgeschaltet und erst nach Anforderung einer weiteren Gebührenbescheinigung durch autorisiertes Bedienpersonal wieder eingeschaltet wird. Hierdurch wird vermieden, dass über den Seitenvorschub, der in jedem herkömmlichen Drucker vorgesehen ist, Leervordrucke zur Verwendung für Fälschungen dem Gerät entnommen werden können.

Zur Verbesserung der Sicherheitsmaßnahmen werden in einem erfindungsgemäßen Gebührenerhebungsgerät vorzugsweise zwei Drucker vorgesehen. Einer der Drucker dient hierbei wie bereits erwähnt dem Ausdruck der eigentlichen Gebührenbescheinigung, weshalb hier bevorzugt ein Nadeldrucker verwendet wird. Hierdurch werden von Seiten des Druckers keine zusätzlichen Anforderungen an die Beschaffenheit der Papiervordrucke gestellt.

Der zweite Drucker dient dazu, einen Kontrollbeleg für die Gebührenerhebungsstelle auszudrucken, so dass jede Transaktion in einer Gebührenerhebungsstelle für einen Kontrolleur nachvollziehbar ist. Zur Vermeidung fehlerhafter Transaktionsbuchungen empfiehlt es sich, die eigentlichen Buchungen erst nach dem vollständigen Ausdruck der beiden Belege, d.h. der Gebührenbescheinigung sowie dem Kontrollbeleg durchzuführen.

In einer besonderen Ausführungsform wird vorgesehen, dass ein Gebührenerhebungsgerät bei Überschreitung eines Limits für einen Geldbetrag einer zu bescheinigenden Gebühr beim Zentralrechner nach einer Autorisierung zur Ausgabe einer derartigen Gebührenbescheinigung nachfragen muss. Ein derartiges Betragslimit kann beispielsweise in Form eines Kartenlimits, falls mit einer Kreditkarte, einer Tankkarte oder ähnlichem bezahlt wird, oder aber auch in Form eines Saldolimits vorliegen, wobei sich das Saldo durch Saldierung aller Transaktionen innerhalb eines bestimmten Zeitraums, beispielsweise eines Tages mit Hilfe einer Karte an einem Gebührenerhebungsgerät ergibt.

Die Datenübertragung zwischen Gebührenerhebungsgerät und Zentralrechner vollzieht sich vorteilhafterweise mit Hilfe einer entsprechenden Verschlüsselung.

In einer besonderen Ausführungsform wird vorgesehen, dass die Gebührenerhebungsgeräte zu vorbestimmten Zeiten den zentralen Rechner anrufen. Dies hat den Vorteil, dass die Gebührenerhebungsgeräte parallel zum Telefon der Gebührenerhebungsstelle geschaltet werden können. Im Falle eines Anrufs des Zentralrechners würde bei dieser Art der Schaltung das Telefon läuten. Nach Herstellung einer Übertragungsleitung läuft sodann ein entsprechendes Erkennungsprotokoll zwischen Zentralrechner und Gebührenerhebungsgerät ab und anschließend werden die seit der letzten Datenübertragung vorgenommenen Transaktionen dem Zentralrechner übermittelt.

Zur Rückgabe versehentlich ausgedruckter Gebührenbescheinigungen werden zusätzlich Mittel zur Stornierung in den Gebührenerhebungsgeräten vorgesehen. Zur Vermeidung von Missbrauch werden derartige Stornierungen nur innerhalb eines bestimmten Zeitraums ab der Abgabe der Gebührenbescheinigungen, beispielsweise innerhalb einer Stunde, akzeptiert.

Die Gebührenerhebungsgeräte können unter Umständen mit unterschiedlichen Peripherie-Geräten versehen sein. Um eine einheitliche Fertigung weitestgehend zu ermöglichen, d.h. einen einheitlichen Programmbaustein (EPROM) zu verwenden, wird dieser Baustein so programmiert, dass die zentrale Prozessoreinheit (CPU) bei jeder Inbetriebnahme selbsttätig in der Lage ist, die jeweilige Konfiguration an Peripherie-Geräten zu erkennen.

Neben einem fest installierten Gebührenerhebungsgerät, das bevorzugt gegen Diebstahl gesichert, z.B. mit Hilfe eines Drahtseils, in der Gebührenerhebungsstelle befestigt wird, wird als besondere Ausführungsform eine mobile Version des Gebührenerhebungsgeräts vorgeschlagen. Ein derartiges Mobilteil umfasst alle notwendigen Komponenten, um die Transaktionen zu speichern. Es kann beispielsweise von einem Kontrolleur des Bundesamts für Güterverkehr, des Bundesgrenzschutzes oder sonstigen Kontrollpersonen mitgeführt werden. Es ermöglicht die sofortige Ausstellung einer Gebührenbescheinigung, sofern ein LKW-Fahrer ohne gültige Bescheinigung angetroffen wird. Das Mobilteil zur Eingabe aller notwendigen Daten kann hierbei unmittelbar zum jeweiligen LKW mitgeführt werden. Insbesondere bei derartigen Mobilteilen wird eine notwendige Initialisierung nach bestimmten Zeitintervallen ohne zwischenzeitlich erfolgte Benutzung vorgesehen.

Da derartige Mobilteile die vorgenommenen elektronischen Buchungen beinhalten, hätte ein Stromausfall in den Mobilteilen den Verlust der geleisteten Zahlungen zur Folge. Daher wird bevorzugt neben einem herkömmlichen Akku eine besonders langlebige Pufferbatterie vorgesehen. Entsprechende stromsparende Schaltzustände bei leerem Akku zur Schonung dieser Batterie sind ebenfalls von Vorteil.

Weiterhin empfiehlt es sich, spezielle Ladungsmodalitäten im Ladegerät für die genannten Akkus vorzusehen, da es möglichst zu vermeiden ist, eine Komplettentladung durchzuführen. Diese Komplettentladung wird üblicherweise bei handelsüblichen Nickel-Kadmium-Akkus durchgeführt, um einen sogenannten Speichereffekt zu löschen. Durch entsprechende Entladungsimpulse während des Ladens kann die Komplettentladung umgangen werden, so dass der Akku der Mobilteile niemals vollständig entleert wird.

Weiterhin werden vorteilhafterweise Kontrollmittel vorgesehen, die eine gute Auflage des Mobilteils auf seiner Basisstation gewährleisten. Dies dient zum einen der zuverlässigen Ladung des Akkus des Mobilgeräts über ein in die Basisstation integriertes Ladegerät, vor allem jedoch zur Gewährleistung einer stabilen Datenübertragung zwischen Mobilteil und Basisstation. Diese Datenübertragung findet bevorzugt über Infrarotschnittstellen statt. In diesem Fall kann beispielsweise über einen lichtempfindlichen Widerstand festgestellt werden, ob das Mobilteil gut auf der Basisstation aufliegt. Das zwischen Mobilteil und Basisstation gelangende Streulicht kann hierbei als Messgröße verwendet werden.

Als Zahlungsmittel für den Ausdruck einer Gebührenbescheinigung kann wie bereits weiter oben angedeutet neben der Zahlung von Bargeld in den Gebührenerhebungsstellen die Zahlung mittels Magnetkarten vorgesehen werden. Hierbei können verschiedene Kreditkarten (American Express, Visa, Eurocard, Dinerscard, usw.) oder aber auch Tankkarten der verschiedensten Mineralölgesellschaften vorgesehen werden. Auch die Abbuchung mit Hilfe von EC-Karten der Banken und Sparkassen im Lastschriftverfahren kann mit Hilfe der Gebührenerhebungsgeräte stattfinden. Die Abbuchung und Abrechnung für die jeweiligen Käufer der Gebührenbescheinigungen an die verschiedenen Herausgeber der genannten Chip- und/oder Magnetkarten wird über den Zentralrechner, der in regelmäßigen Zeitabschnitten alle Transaktionsdaten aller Gebührenerhebungsgerät erhält, vorgenommen.

Bevorzugt wird in dem Gebührenerhebungsgerät auch ein Speicherplatz für eine sogenannte Sperrliste vorgesehen. Mit Hilfe dieser Sperrliste kann jedes Gebührenerhebungsgerät bereits selbsttätig, d.h. im sogenannten Offline-Betrieb, gesperrte Karten identifizieren und den Ausdruck einer Gebührenbescheinigung verweigern. Da die Sperrliste in den Gebührenerhebungsgeräten nicht ständig aktualisiert ist, sondern im Rhythmus der regelmäßigen Datenübertragung an den Zentralrechner (beispielsweise im Tagesrhythmus) auf den neusten Stand gebracht wird, empfiehlt es sich, wie bereits erwähnt, bei hochwertigen Transaktionen eine sogenannte Online-Prüfung gegenüber einer zentralen Sperrliste im Zentralrechner vorzunehmen. Dem Bediener macht sich eine derartige Prüfung lediglich in einer längeren Antwortzeit des Gebührenerhebungsgeräts bemerkbar.

Die Gebührenerhebungsgeräte werden bevorzugt so ausgebildet, dass die für den erfindungsgemäßen Betrieb notwendigen Programme und/oder auch sämtliche Daten in einem Download-Verfahren jederzeit vom Zentralrechner auf die Gebührenerhebungsgeräte überspielt werden können. Dies ermöglicht beispielsweise die problemlose Aktualisierung von Sperrlisten, von Gebührentabellen usw.

In einer weiteren vorteilhaften Ausführungsform der Erfindung wird zusätzlich eine Vorrichtung zur Ausgabe von sog. Adhäsiv-Vignetten, vorgesehen, die zur Ausgabe dieser Adhäsiv-Vignetten Gültigkeitsmerkmale auf einer Vignetten-Vorlage anbringt. Derartige Adhäsiv-Vignetten sind bereits bekannt, bspw. für die Autobahnbenutzungsgebühren in der Schweiz. In Österreich finden ab 1997 ebenfalls derartige Adhäsiv-Vignetten Verwendung.

Für eine flexible Ausgabe solcher Adhäsiv-Vignetten bspw. bezüglich des zeitigen Gültigkeitsbereichs müssen die Vignetten entsprechend gekennzeichnet werden. Da zugleich hohe Sicherheitsvoraussetzungen gewährleistet sein müssen, werden erfindungsgemäß bestimmte Gültigkeitsmerkmale, bspw. die Gültigkeitsdauer bzw. der Gültigkeitszeitraum bevorzugt erst bei der Ausgabe der Vignette auf eine fälschungssichere Vignetten-Vorlage angebracht.

Die Vorteile einer erfindungsgemäßen Vorrichtung zur Ausgabe von Adhäsiv-Vignetten sind bspw. in Verbindung mit den oben beschriebenen Vorrichtungen zur Erhebung von Straßenbenutzungsgebühren nutzbar, können auch jedoch lösgelöst hiervon realisiert werden.

In einer vorteilhaften Ausführungsform der Erfindung werden Mittel zum Stanzen der Gültigkeitsmerkmale in die Vignetten-Vorlage vorgesehen. Auf diese Weise kann die Vignetten-Vorlage vollständig mit Adhäsionsmittel und Abdeckfolie vorbereitet werden, wobei die Gültigkeitsmerkmale erst bei der Ausgabe wie oben angeführt eingestanzt werden.

Vorteilhafterweise wird eine erfindungsgemäße Vorrichtung so ausgebildet, dass unterschiedliche Gültigkeitsmerkmale (z. B. Tage, Wochen, Monate, Regionen, etc.) ansteuerbar anzubringen sind. Je nach Voreinstellung werden somit die jeweils gewünschten Merkmale angebracht, z. B. eingestanzt.

In einer vorteilhaften Ausführungsform der Erfindung wird wenigstens ein Typenrad zum Stanzen alphanumerischer Stanzbilder vorgesehen. Ein derartiges Typenrad ist ein Beispiel für eine Vorrichtung zum ansteuerbaren Einstanzen unterschiedlicher Gültigkeitsmerkmale.

Weiterhin wird vorzugsweise wenigstens ein Stanzstift zum Ausstanzen spezifischer Kennungsfelder vorgesehen. Derartige Kennungsfelder, die symbolisch bspw. Monatstage oder Monatsnummern bezeichnen können, werden hierbei vorbereitet auf die Vignetten-Vorlage ausgedruckt. Nach dem Ausstanzen durch den Stanzstift sind sie für den jeweiligen Zeitraum oder in einer sonstigen Bedeutung gültig und fertig zur Ausgabe.

Vorteilhafterweise werden zusätzliche Mittel zum Aufkleben einer Folie nach dem anbringen der Gültigkeitsmerkmale auf der Rückseite der Vignette vorgesehen. Auf diese Weise können die ausgestanzten Bereiche der Vignette farblich hervorgehoben werden.

Vorzugsweise werden zusätzlich Mittel zur elektronischen Erfassung von auf der Vignetten-Vorlage befindlichen codierten Vignetten-Daten vorgesehen. Derartige Daten können bspw. in einer Seriennummer vorgesehen werden. Durch derartige Mittel zur Erfassung solcher Vignetten-Daten kann eine Kontrolle darüber stattfinden, welche Vignetten-Vorlagen insgesamt ausgegeben wurden. Die Mittel zur elektronischen Erfassung können bspw. in Form eines Barcodelesers bestehen, der einen entsprechenden Barcode auf der Vignetten-Vorlage liest.

Vorzugsweise werden Mittel zur Zuordnung einer auf der Vignetten-Vorlagen vorgesehen Kennung zu den bei der Ausgabe der Vignette angebrachten Gültigkeitsmerkmalen vorgesehen. Somit ist sowohl die bestimmte Vignetten-Vorlage, bspw. aufgrund einer Seriennummer erfasst sowie die entsprechenden Gültigkeitsmerkmale, bspw. Monate, Wochen oder Tage an denen die Vignette gültig ist, zugeordnet. Somit ist eine vollständige Kontrolle sowohl hinsichtlich der ausgegebenen Vignetten als auch bezüglich des Gültigkeitsbereichs einer Vignette möglich.

Vorzugsweise werden die Zuordnungsdaten, d. h. die spezifischen Vignettendaten (z. B. Seriennummer) sowie die Gültigkeitsdaten, zentral erfasst und abrufbar abgelegt. Eine derartige zentrale Erfassung und Abrufung erleichtert die oben angeführte Kontrolle.

Vorteilhafterweise werden diese Daten über ein Terminal und/ oder Mobilteil einer Vorrichtung wie oben ausgeführt abrufbar vorgesehen. Somit kann an jeder Stelle, an der sich ein Ausgabeterminal befindet, die Gültigkeit einer Vignette überprüft werden. Insbesondere bieten die oben angeführten Mobilteile große Vorteile, da ein solches Mobilteil zu einer regelmäßigen Verkehrskontrolle mitgeführt werden kann.

Vorzugsweise werden die Mittel zum Anbringen der Gültigkeitsmerkmale in einem Terminal und/ oder Mobilteil wie vorab beschrieben integrierbar vorgesehen. Hierdurch erübrigt sich ein Zusatzgerät.

Vorteilhafterweise werden Mittel zur Eingabe ausgewählter, auf einer Vignetten-Vorlage anzubringende Gültigkeitsmerkmale vorgesehen. Hierdurch kann angegeben werden, für welchen Zeitraum oder bei Bedarf auch für welche Art von Fahrzeug, für welchen Streckenbereich usw. die Vignette gültig gemacht werden soll.

In einer besonders vorteilhaften Ausführungsform wird die Tastatur eines Terminals und/ oder eines Mobilteils wie vorbeschrieben zur Eingabe der gewünschten Gültigkeitsmerkmale verwendet. Hierdurch erübrigt sich die Anordnung separater Eingabemittel.

Ein Ausführungsbeispiel der Erfindung ist in der Zeichnung dargestellt und wird anhand der Figuren nachfolgend näher erläutert.

### Im Einzelnen zeigen

- Fig. 1: ein Blockschaltbild eines erfindungsgemäßen Gebührenerhebungsgeräts,
- Fig. 2: eine perspektivische Darstellung eines Gebührenerhebungsgerätes,
- Fig. 3: ein Blockdiagramm zur Veranschaulichung der Einbindung der Gebührenerhebungsstellen in das Gesamtsystem und
- Fig. 4: eine perspektivische Darstellung einer erfindungsgemäßen Vorrichtung mit einem CD-ROM-Erweiterungsmodul.

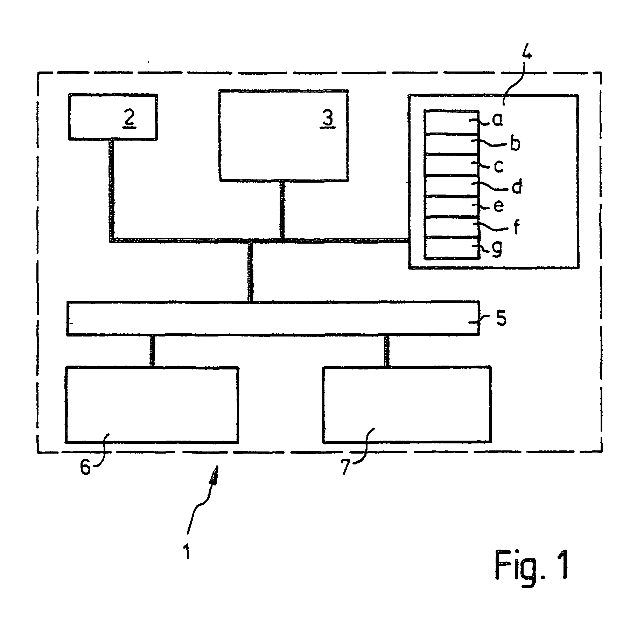

Das Gebührenerhebungsgerät 1 gemäß Fig. 1 umfaßt eine CPU 2, einen Speicher 3 sowie verschiedene Peripheriegeräte 4a-g. Die Peripheriegeräte bestehen aus einem Display 4a, seriellen Schnittstellen 4b, einem Chipinterface 4c, einem Magnetkarteninterface 4d, einer Tastatur 4e, einer Uhr 4f sowie zweier Drucker 4g. Ein in einem EPROM 5 gespeichertes Programm dient zur automatischen Hardware-Erkennung, beispielsweise zur Unterscheidung, ob ein Mobilterminal 6 oder ein stationäres Terminal 7 vorliegt.

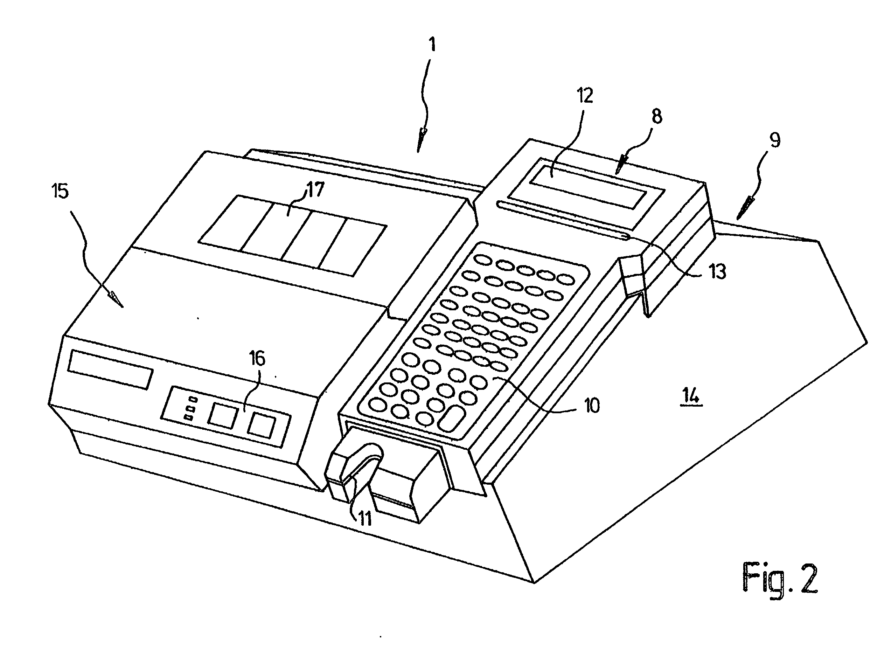

Das Gebührenerhebungsgerät 1 gemäß Fig. 2 umfaßt ein Kompaktterminal 8, das auf einer Basisstation 9 liegt. Das Kompaktterminal 8 könnte sowohl ein Mobilterminal 6 als auch ein Stationärterminal 7 gemäß Fig. 1 sein. Im Falle eines Stationärterminals 7 wäre das Kompaktterminal 8 über Steckverbindungen, beispielsweise über eine RS 232 Schnittstelle mit der Basisstation verbunden. Im Falle eines Mobilterminals 6 befindet sich auf der Unterseite des Kompaktterminals 8 ein Infrarotinterface zur optischen Datenübertragung sowie Auflagekontakte zum Laden des Akkus. In diesem Fall wäre auch ein vorhin erwähntes Akkumanagement in das Kompaktterminal 8 integriert.

Das Kompaktterminal 8 umfaßt weiterhin eine alphanumerische Tastatur 10, ein Hybridkartenlesegerät, dessen Kartenschlitz 11 im vorderen Bereich des Kompaktterminals 8 zu sehen ist. Am gegenüberliegenden Ende des Kompaktterminals 8 befindet sich ein Display 12 sowie ein nicht näher dargestellter Drucker. Der Papierausgabeschlitz 13 ist unterhalb des Displays 12 erkennbar.

Die Basisstation 9 umgibt ein festes Gehäuse 14, wobei sich links vom Kompaktterminal 8 ein Gebührenbescheinigungsdrucker 15 befindet. Auf der Rückseite des Gehäuses 14 in der Darstellung gemäß Fig. 2 nicht erkennbar befindet sich eine verschließbare Klappe, durch die der Papierschacht des Druckers 15 zugänglich ist. Bei dem Drucker handelt es sich um ein herkömmliches Druckermodell, das über ein Tastenfeld 16 zu bedienen ist. An der Oberseite des Druckers 15 befindet sich die Bescheinigungsausgabe 17.

Das Gebührenerhebungsgerät wird mit vorgedruckten und einer Kennziffer versehenen Bescheinigungsvordrucken gefüllt. Auf der Rückseite des Gehäuses 14 befindet sich hierzu ein Papierschacht für den Drucker 15. Zur Erstellung einer Gebührenbescheinigung wird zunächst eine Bescheinigungsnummer des Bescheinigungsvordrucks in das Terminal eingegeben, so daß ab sofort jederzeit nachvollziehbar ist, welcher Papiervordruck konkret an wen und mit welcher Gebührenbescheinigung ausgegeben wurde.

Dementsprechend müssen stornierte Bescheinigungen oder auf sonstige Weise nicht verwendete Bescheinigungsvordrucke, beispielsweise abgerissene Vordrucke zum Einlegen des Papiers sorgfältig verwahrt und zur Erfassung an eine zentrale Stelle übersandt werden, die sowohl die an die Gebührenbescheinigungsstellen ausgegebenen Vordrucke als auch die ausgedruckten Vordrucke über den Zentralrechner anhand der Bescheinigungsnummer kontrolliert. Zur Kontrolle der Bescheinigungsnummer wird eine Prüfziffer und/oder eine mehrmalige Eingabe vorgesehen, um die korrekte Eingabe zu überprüfen.

Sodann wird entschieden, mit welchem Zahlungsmittel die Gebühr beglichen werden soll. Im Falle einer Barzahlung wird dies über das Tastaturfeld 10 eingegeben. Im Falle einer Bezahlung über eine Kreditkarte bzw. einer Tankkarte oder einer Euroscheckkarte wird diese in den Kartenschlitz 11 des Kartenlesegerätes eingeführt. Im Falle einer Tankkarte wird das Fahrzeugkennzeichen automatisch erfaßt und über das Display kontrolliert. Im Falle einer anderen Kreditkarte wird das Fahrzeugkennzeichen unmittelbar über die Tastatur 10 eingegeben, die hierzu nicht nur Zifferntasten, sondern, wie oben angeführt, auch Buchstabentasten umfaßt.

Außer dem Kennzeichen, das entweder automatisch eingelesen wird oder über die Tastatur 10 eingegeben wird, werden weitere Daten, beispielsweise die Nationalität oder die Anzahl der Achsen des Lastkraftwagens eingegeben. Derartige Daten sind entweder für die Höhe der Gebühr oder aber für die anschließende Abrechnung innerhalb des Straßengebührenverbundes notwendig.

Nach Abschluß der Dateneingabe und Bestätigung dieser Dateneingabe erfolgt eine Plausibilitätsprüfung der Daten sowie die Anzeige der zu entrichtenden Gebühr. Nach einer Bestätigung werden die Gebührenbescheinigung im Drucker 15 sowie der Kontrollbeleg im Kompaktterminal 8 ausgedruckt. Gegebenenfalls findet zwischendurch die oben angeführte On-line-Anfrage beim Zentralrechner statt, falls ein bestimmter Schwellenbetrag durch die Gebühr überschritten wird. Nach dem vollständigen Ausdruck der Bescheinigung bzw. des Kontrollbelegs wird die Transaktion gebucht. Die Gebührenerhebung kann danach nur noch durch eine Stornierung innerhalb einer bestimmten Zeit, beispielsweise einer Stunde rückgängig gemacht werden.

Die Gebührenbescheinigungen werden dem LKW-Fahrer ausgehändigt, während die Kontrollbelege vom LKW-Fahrer unterschrieben bei der Gebührenerhebungsstelle aufbewahrt werden.

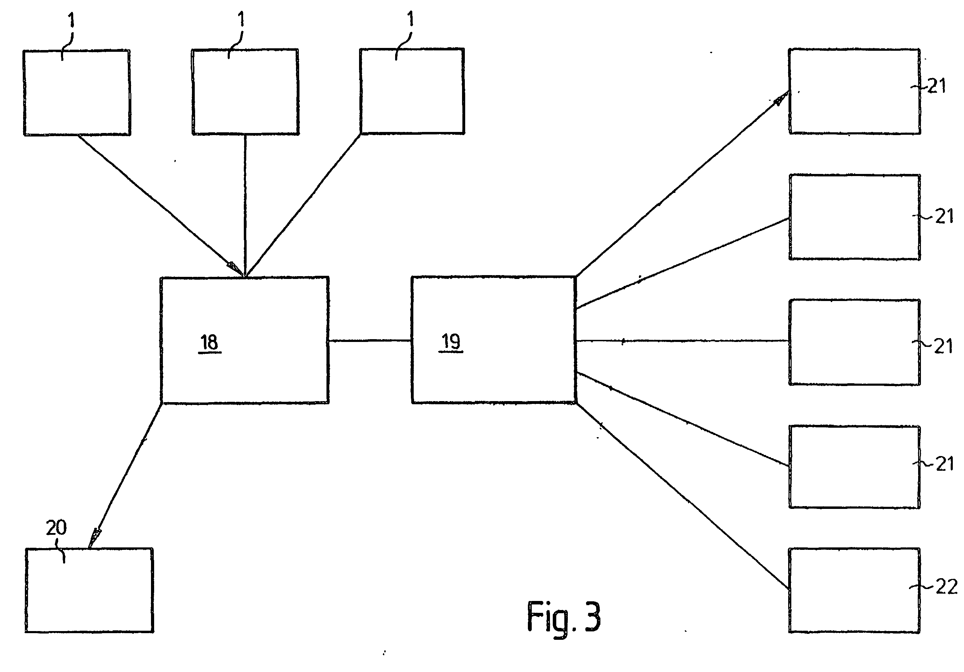

Die Gebührenerhebungsgeräte 1 stehen über ein Modem mit einem Zentralrechner 18 in Verbindung (s. Fig. 3). Dieser Zentralrechner 18 wiederum kommuniziert mit einer zentralen Abrechnungsstelle 19 sowie Datenerfassungsstellen 20 des Endempfängers der Gebühren, in Deutschland das Bundesministerium für Verkehr. Die zentrale Abrechnungsstelle 19 ihrerseits kommuniziert mit den einzelnen Hostrechnern der verschiedenen Kredit- bzw. Tankkartengesellschaften 21. Weiterhin steht die Abrechnungsstelle 19 mit dem Host 22 einer Gesellschaft zur Abbuchung von Euroscheckkarten-Transaktionen in Verbindung.

Jedes Gebührenerhebungsgerät 1 ruft zu vorbestimmten Zeiten beim Zentralrechner 18 an. Nach Austausch eines Erkennungsprotokolls werden die stattgefundenen Transaktionen verschlüsselt auf den Zentralrechner übertragen. In umgekehrter Richtung werden die für den Betrieb notwendigen Datenbestände, beispielsweise Sperrlisten, Gebührentabellen usw. vom Zentralrechner aus aktualisiert.

Der Zentralrechner sammelt die Ergebnisse aller Gebührenerhebungsgeräte 1 und gibt die entsprechenden Daten einerseits an die Empfängeradresse 20 und andererseits an die Abrechnungsstelle 19 zur weiteren Veranlassung weiter. Da bei dem beschriebenen System Transaktionen von erheblichen Geldwerten stattfinden, ist es unabdingbar, entsprechende Sicherungsvorrichtungen gegenüber einem Mißbrauch eines Gebührenerhebungsgeräts zu treffen.

So wird für den Betrieb der Gebührenerhebungsgeräte eine regelmäßige Initialisierung, beispielsweise bei der Inbetriebnahme, bei Schichtwechsel des Bedienpersonals, nach einem Stromausfall usw., wie bereits oben erwähnt, verlangt. Diese Initialisierung kann nur von einem Bediener mit der korrekten Bedienerkarte an dem zugeordneten Gebührenerhebungsgerät durchgeführt werden. Der Abgleich zwischen Bedienerkarte und Gebührenerhebungsgerät 1 ist dabei unmittelbar im Terminal ohne Zwischenabfrage beim Zentralrechner 18 möglich.

Als erfindungsgemäße Sicherungsmaßnahme wird, wie bereits geschildert, vorgesehen, daß die Zuordnung der Kenndaten zwischen Gebührenerhebungsgerät 1 und der entsprechenden Bedienerkarte erst mit der erstmaligen Inbetriebnahme des jeweiligen Gebührenerhebungsgeräts 1 stattfindet. Der Einrichter des Gebührenerhebungsgeräts wählt dabei eine beliebige Bedienerkarte aus einer Vielzahl von vorcodierten Bedienerkarten aus und meldet das Gebührenerhebungsgerät 1 zur erstmaligen Inbetriebnahme beim Zentralrechner 18 an. Dieser erhält von dem Gebührenerhebungsgerät die Kenndaten der eingesteckten zufällig ausgewählten Bedienerkarte und stellt in seinem Datenspeicher die Zuordnung zum entsprechenden Gebührenerhebungsgerät her, indem er in der vorliegend beschriebenen Ausführungsform mittels eines bestimmten Algorithmus aus den Kenndaten der Bedienerkarte Kenndaten für die Terminal-Identität generiert. Diese Terminal-Identität wird im folgenden in den Speicher des Terminals geladen. Ab sofort läßt sich somit dieses spezielle Gebührenerhebungsgerät mit dieser bestimmten Bedienerkarte initialisieren.

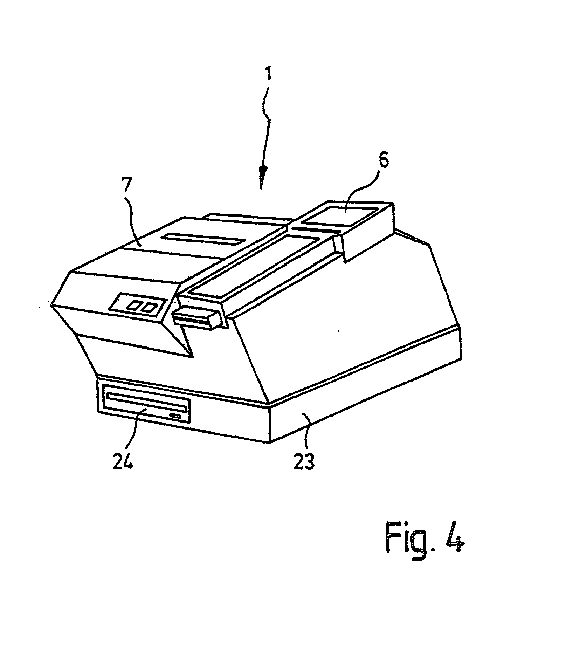

In der Darstellung gemäß Fig. 4 ist ein Gebührenerhebungsgerät 1 mit aufgelegtem Mobilterminal 6 sowie einem stationären Terminal 7 erkennbar. Das Mobilterminal 6 sowie das stationäre Terminal 7 entspricht den vorgenannten Ausführungsbeispielen. Nunmehr ist die gesamte Vorrichtung 1 auf einen Sockel 23 gestellt, der ein CD-Laufwerk 24 umfaßt. Der Sockel 23 mit CD-Laufwerk 24 stellt somit ein Erweiterungsmodul für das bisherige Gebührenerhebungsgerät 1 dar. Die weiteren technischen Änderungen nach dem Anschluß des CD-Laufwerks an die Recheneinheit des Gebührenerhebungsgeräts 1 bspw. über ein internes Bussystem bestehen in einer Anpassung der Betriebssoftware zur Nutzung der über Compactdisks zur Verfügung stellenden Datenbanken.
- 1: Gebührenerhebungsgerät
- 2: CPU
- 3: Speicher
- 4: Peripheriegeräte
- 5: EPROM
- 6: Mobilterminal
- 7: Stationärterminal
- 8: Kompaktterminal
- 9: Basisstation
- 10: Tastatur
- 11: Kartenschlitz
- 12: Display
- 13: Papierausgabe
- 14: Gehäuse
- 15: Gebührenbescheinigungsdrucker
- 16: Tastenfeld
- 17: Bescheinigungsausgabe
- 18: Zentralrechner
- 19: Abrechnungsstelle
- 20: Datenerfassungsstelle
- 21: Hostrechner
- 22: EC-Host
- 23: Sockel
- 24: CD-Laufwerk

## Patentansprüche

1. Vorrichtung zur Erhebung von Straßenbenutzungsgebühren, die wenigstens ein Gebührenerhebungsgerät (1) mit einem Terminal (6,7), das wenigstens zeitweise über einen Datenkanal mit einem Zentralrechner (18) in Verbindung steht, und mit einem Drucker (15) zur Ausgabe von Gebührenbescheinigungen umfasst, **dadurch gekennzeichnet, dass** das Terminal (6,7) mit wenigstens einer Datenbank verbunden ist, die Daten über das zu erfassende Straßennetz, Fahrzeugdaten gebührenpflichtiger Fahrzeuge und/oder Gebührendaten enthält.

2. Vorrichtung nach einem der vorgenannten Ansprüche, **dadurch gekennzeichnet, dass** eine Datenbank für die Zuordnung von Gebühren an unterschiedliche Fahrzeugladungen vorhanden ist.

3. Vorrichtung nach einem der vorgenannten Ansprüche, **dadurch gekennzeichnet, dass** eine Datenbank vorhanden ist, die Gebührendaten abhängig von Streckendaten, von Fahrzeugdaten, von ladungsspezifischen Daten und/ oder von einer Zeitdauer enthält, vorhanden ist.

4. Vorrichtung nach einem der vorgenannten Ansprüche, **dadurch gekennzeichnet, dass** die Datenbank lokal an jedem Terminal separat vorgesehen ist.

5. Vorrichtung nach einem der vorgenannten Ansprüche, **dadurch gekennzeichnet, dass** als Speicher für die Datenbank ein Compactdisk-Laufwerk vorgesehen ist.

6. Vorrichtung der einem der vorgenannten Ansprüche, **dadurch gekennzeichnet, dass** die Betriebssoftware auf dem gleichen Datenträger wie die oben genannte Datenbank vorgesehen ist.

7. Vorrichtung nach einem der vorgenannten Ansprüche, **dadurch gekennzeichnet, dass** das Terminal eine Kartenleseeinrichtung zum Lesen von Magnet- oder Chipkarten umfasst, und dass Initialisierungsmittel zur Initialisierung des Terminals (6, 7) vorhanden sind, die Mittel zur Erkennung einer Zuordnung jedes Terminals (6, 7) zu einer oder mehreren Bedienerkarten in Form von Magnet- oder Chipkarten umfassen, wobei Mittel zur Herstellung der Zuordnung der jeweiligen Kenndaten von Terminal (6, 7) und Bedienerkarte bei der Erstinbetriebnahme des Terminals (6, 7) im Zentralrechner (18) vorhanden sind.

8. Vorrichtung nach einem der vorgenannten Ansprüche, **dadurch gekennzeichnet, dass** die Mittel zur Herstellung einer Zuordnung Mittel zur Generierung einer Terminal-Identität im Zentralrechner (18) ausgehend von Kenndaten einer Bedienerkarte und Mittel zum Abspeichern der Terminal-Identität im Speicher des zugehörigen Terminals umfassen.

9. Vorrichtung nach einem der vorgenannten Ansprüche, **dadurch gekennzeichnet, dass** eine Initialisierung des Gebührenerhebungsgeräts (1) mit Hilfe einer zugeordneten Bedienerkarte bei einem Tagesabschluss und/oder Schichtwechsel des Bedienpersonals in der Gebührenerhebungsstelle und/oder bei einem Stromausfall und/oder nach einem bestimmten Zeitintervall ohne Benutzung des Gebührenerhebungsgeräts vorgesehen ist.

10. Vorrichtung nach einem der vorgenannten Ansprüche, **dadurch gekennzeichnet, dass** Kommunikationsmittel zur Kommunikation zwischen dem Zentralrechner (18) und einem Terminal (6, 7) so ausgebildet sind, dass das Terminal (6, 7) nach dem Aufbau der Verbindung ohne Anweisung des Zentralrechners (18) keine Daten senden kann.

11. Vorrichtung nach einem der vorgenannten Ansprüche, **dadurch gekennzeichnet, dass** der Papierschacht und/oder die Papierzuführung zum Drucker (15) des Gebührenerhebungsgeräts (1) verschließbar ist.

12. Vorrichtung nach einem der vorgenannten Ansprüche, **dadurch gekennzeichnet, dass** Mittel zum Ausschalten des Druckers (15) nach einem Ausdruck vorhanden sind.

13. Vorrichtung nach einem der vorgenannten Ansprüche, **dadurch gekennzeichnet, dass** in dem Gebührenerhebungsgerät (1) zwei Drucker (15) vorgesehen sind.

14. Vorrichtung nach einem der vorgenannten Ansprüche, **dadurch gekennzeichnet, dass** Mittel zur Transaktionsbuchung erst nach vollständigem Ausdruck einer Gebührenbescheinigung und eines Kontrollbelegs vorgesehen sind.

15. Vorrichtung nach einem der vorgenannten Ansprüche, **dadurch gekennzeichnet, dass** Kontrollmittel zur Anfrage vom Gebührenerhebungsgerät (1) an den Zentralrechner (18) und zur Autorisierung oder Sperrung einer Transaktion vom Zentralrechner (18) bei einer Betragsüberschreitung einer oder mehrerer Transaktionen über eine bestimmte Betragsgrenze vorhanden sind.

16. Vorrichtung nach einem der vorgenannten Ansprüche, **dadurch gekennzeichnet, dass** Mittel zum Laden von Programmen und/oder Daten im Terminal (6, 7) des Gebührenerhebungsgeräts (1) über den Zentralrechner (18) vorgesehen sind.

17. Vorrichtung nach einem der vorgenannten Ansprüche, **dadurch gekennzeichnet, dass** die Datenübertragung verschlüsselt ist.

18. Vorrichtung nach einem der vorgenannten Ansprüche, **dadurch gekennzeichnet, dass** Mittel zur Stornierung einer Transaktion vorgesehen sind, die eine Stornierung nur innerhalb eines bestimmten Zeitintervalls ab dem Zeitpunkt der Buchung der Transaktion zulassen.

19. Vorrichtung nach einem der vorgenannten Ansprüche, **dadurch gekennzeichnet, dass** im Terminal (6, 7) des Gebührenerhebungsgeräts (1) Mittel zur selbsttätigen Erkennung von angeschlossenen Peripheriegeräten (4a-g) vorgesehen sind.

20. Vorrichtung nach einem der vorgenannten Ansprüche, **dadurch gekennzeichnet, dass** ein Mobilteil (7) mit Tastatur (41, 10), Speicher (3), CPU (2), und Kartenleseeinrichtung vorhanden ist.

21. Vorrichtung nach einem der vorgenannten Ansprüche, **dadurch gekennzeichnet, dass** eine Basisstation mit Ladegerät für das Mobilteil (7) vorhanden ist, wobei Kontrollmittel für eine gute Auflage des Mobilteils auf der Basisstation vorgesehen sind.

22. Vorrichtung nach Anspruch 20 oder 21, **dadurch gekennzeichnet, dass** das Mobilteil (7) zusätzlich zum Akku eine Pufferbatterie aufweist.

23. Vorrichtung nach einem der vorgenannten Ansprüche, **dadurch gekennzeichnet, dass** Mittel zum Anbringen von Gültigkeitsmerkmalen auf einer Adhäsiv-Vignetten-Vorlage vorhanden sind.

24. Vorrichtung nach Anspruch 23, **dadurch gekennzeichnet, dass** die Mittel zum Anbringen von Gültigkeitsmerkmalen Mittel zum Stanzen umfassen.

25. Vorrichtung nach einem der vorgenannten Ansprüche 23 und 24, **dadurch gekennzeichnet, dass** verschiedene Gültigkeitsmerkmale wahlweise ansteuerbar anbringbar sind.

26. Vorrichtung nach einem der vorgenannten Ansprüche 23 bis 25, **dadurch gekennzeichnet, dass** wenigstens ein Typenrad zum Stanzen alphanummerischer Stanzbilder vorgesehen ist.

27. Vorrichtung nach einem der vorgenannten Ansprüche 23 bis 26, **dadurch gekennzeichnet, dass** wenigstens ein Stanzstift zum Ausstanzen spezifischer Kennungsfelder vorgesehen ist.

28. Vorrichtung nach einem der vorgenannten Ansprüche 23 bis 27, **dadurch gekennzeichnet, dass** Mittel zum Aufkleben einer Folie nach dem Anbringen der Gültigkeitsmerkmale vorhanden sind.

29. Vorrichtung nach einem der vorgenannten Ansprüche 23 bis 28, **dadurch gekennzeichnet, dass** Mittel zur elektronischen Erfassung von auf einer Vignetten-Vorlage befindlichen codierten Vignettendaten vorgesehen sind.

30. Vorrichtung nach einem der vorgenannten Ansprüche 23 bis 29, **dadurch gekennzeichnet, dass** Mittel zur Zuordnung einer auf der Vignetten-Vorlage vorgesehenen Kennung zu den bei der Ausgabe angebrachten Gültigkeitsmerkmalen vorhanden sind.

31. Vorrichtung nach einem der vorgenannten Ansprüche 23 bis 30, **dadurch gekennzeichnet, dass** die Gültigkeitsmerkmale sowie Kennungsdaten einer Vignetten-Vorlage zentral erfassbar und abrufbar sind.

32. Vorrichtung nach einem der vorgenannten Ansprüche 23 bis 31, **dadurch gekennzeichnet, dass** Daten der Gültigkeitsmerkmale sowie die zugeordnete Kennung der Vignetten-Vorlage über ein Terminal und/ oder Mobilteil nach einem der vorgenannten Ansprüche abrufbar sind.

33. Vorrichtung nach einem der vorgenannten Ansprüche 23 bis 32, **dadurch gekennzeichnet, dass** die Mittel zum Anbringen von Gültigkeitsmerkmalen in ein Terminal und/oder ein Mobilteil nach einem der vorgenannten Ansprüche integrierbar sind.

34. Vorrichtung nach einem der vorgenannten Ansprüche 23 bis 33, **dadurch gekennzeichnet, dass** Mittel zur Eingabe von Auswahlkriterien für die Auswahl von an einer Vignetten-Vorlage anzubringenden Gültigkeitsmerkmalen vorgesehen sind.

35. Vorrichtung nach Anspruch 34, **dadurch gekennzeichnet, dass** die Mittel zur Eingabe der Auswahlkriterien die Tastatur eines Terminals und/ oder eines Mobilteils nach einem der vorgenannten Ansprüche umfassen.

36. Verwendung der Vorrichtung zur Erhebung von Straßenbenutzungsgebühren nach einem der vorhergehenden Ansprüche, zur Erhebung von streckenabhängigen, fahrzeugabhängigen, ladungsspezifischen und/oder zeitabhängigen Straßenbenutzungsgebühren.

## Claims

1. Apparatus for charging road tolls, comprising at least one toll charging device (1) with a terminal (6, 7) which is connected to a host computer (18) at least intermittently via a data channel, and with a printer (15) for issuing toll receipts, **characterised in that** the terminal (6, 7) is connected to at least one database containing data about the road network to be covered, vehicle data about vehicles subject to tolls and/or toll data.

2. Apparatus according to any of the preceding claims, **characterised in that** a database is provided for allocating tolls to different vehicle loads.

3. Apparatus according to any of the preceding claims, **characterised in that** a database is provided, containing toll data as a function of distance data, vehicle data, load-specific data and/or of a time period.

4. Apparatus according to any of the preceding claims, **characterised in that** the database is provided locally on each terminal separately.

5. Apparatus according to any of the preceding claims, **characterised in that** a compact disc drive is provided as memory for the database.

6. Apparatus according to any of the preceding claims, **characterised in that** the operating software is provided on the same data carrier as the above-mentioned database.

7. Apparatus according to any of the preceding claims, **characterised in that** the terminal comprises a card reader for reading magnetic or chip cards and **in that** initialisation means comprising means for detecting an allocation of each terminal (6, 7) to one or more operator cards in the form of magnetic or chip cards are provided for initialising the terminal (6, 7), means being provided in the host computer (18) for producing the allocation of the respective characteristic data of terminal (6, 7) and operator card at the first start-up of the terminal (6, 7).

8. Apparatus according to any of the preceding claims, **characterised in that** the means for producing an allocation comprise means for generating a terminal identity in the host computer (18) on the basis of characteristic data of an operator card and means for storing the terminal identity in the memory of the associated terminal.

9. Apparatus according to any of the preceding claims, **characterised in that** initialisation of the toll charging device (1) by means of an associated operator card is provided at the end of a day and/or change of operator shift in the toll charging station and/or in the event of a power failure and/or after a specific time interval without use of the toll charging device.

10. Apparatus according to any of the preceding claims, **characterised in that** communication means for communication between the host computer (18) and a terminal (6, 7) are so designed that the terminal (6, 7) cannot send data after construction of the connection without an instruction from the host computer (18).

11. Apparatus according to any of the preceding claims, **characterised in that** the paper duct and/or the paper feed to the printer (15) of the toll charging device (1) may be closed.

12. Apparatus according to any of the preceding claims, **characterised in that** means are provided for switching off the printer (15) after a printout.

13. Apparatus according to any of the preceding claims, **characterised in that** two printers (15) are provided in the toll charging device (1).

14. Apparatus according to any of the preceding claims, **characterised in that** means are provided for entering a transaction only after complete printout of a toll receipt and a counterfoil.

15. Apparatus according to any of the preceding claims, **characterised in that** control means are provided for an information request by the toll charging device (1) to the host computer (18) and for authorising or blocking a transaction by the host computer (18) if an amount for one or more transactions is exceeded beyond a specific limit.

16. Apparatus according to any of the preceding claims, **characterised in that** means are provided for loading programmes and/or data in the terminal (6, 7) of the toll charging device (1) via the host computer (18).

17. Apparatus according to any of the preceding claims, **characterised in that** the data transmission is encoded.

18. Apparatus according to any of the preceding claims, **characterised in that** means are provided for cancelling a transaction, which allow cancellation only within a specific time interval from the moment of entry of the transaction.

19. Apparatus according to any of the preceding claims, **characterised in that** means for automatic detection of connected peripherals (4a-g) are provided in the terminal (6, 7) of the toll charging device (1).

20. Apparatus according to any of the preceding claims, **characterised in that** a mobile part (7) with keyboard (41, 10), memory (3), CPU (2) and card reader is provided.

21. Apparatus according to any of the preceding claims, **characterised in that** a base station with a loading device for the mobile part (7) is provided, control means being provided for perfect support of the mobile part on the base station.

22. Apparatus according to claim 20 or 21, **characterised in that** the mobile part (7) has a backup battery in addition to the electrochemical battery.

23. Apparatus according to any of the preceding claims, **characterised in that** means are provided for applying validity features to an adhesive vignette master.

24. Apparatus according to claim 23, **characterised in that** the means for applying validity features comprise punching means.

25. Apparatus according to any of the preceding claims 23 and 24, **characterised in that** various validity features can be applied in a selectively controllable manner.

26. Apparatus according to any of the preceding claims 23 to 25, **characterised in that** at least one print wheel is provided for punching alphanumerical punched images.

27. Apparatus according to any of the preceding claims 23 to 26, **characterised in that** at least one punching pin is provided for punching out specific identification fields.

28. Apparatus according to any of the preceding claims 23 to 27, **characterised in that** means are provided for sticking on a film after applying the validity features.

29. Apparatus according to any of the preceding claims 23 to 28, **characterised in that** means are provided for the electronic detection of coded vignette data located on a vignette master.

30. Apparatus according to any of the preceding claims 23 to 29, **characterised in that** means are provided for allocating an identification provided on the vignette master to the validity features applied at output.

31. Apparatus according to any of the preceding claims 23 to 30, **characterised in that** the validity features and identification data of a vignette master can be detected and retrieved centrally.

32. Apparatus according to any of the preceding claims 23 to 31, **characterised in that** data concerning the validity features and the associated identification of the vignette master can be retrieved via a terminal and/or mobile part according to any of the preceding claims.

33. Apparatus according to any of the preceding claims 23 to 32, **characterised in that** the means for applying validity features may be integrated into a terminal and/or a mobile part according to any of the preceding claims.

34. Apparatus according to any of the preceding claims 23 to 33, **characterised in that** means are provided for inputting selection criteria for selecting validity features to be applied to a vignette master.

35. Apparatus according to claim 34, **characterised in that** the means for inputting selection criteria comprise the keyboard of a terminal and/or of a mobile part according to any of the preceding claims.

36. Use of the apparatus for charging road tolls according to any of the preceding claims, for charging distance-dependent, vehicle-dependent, load-specific and/or time-dependent road tolls.

## Revendications

1. Dispositif pour prélever des taxes de péages (taxes d'utilisation routière) comprenant au moins un appareil de prélèvement de taxes (1) avec un terminal (6, 7) relié au moins en partie par un canal de données à un calculateur central (18) et une imprimante (15) pour émettre des quittances de taxes,
**caractérisé en ce que**
le terminal (6, 7) est relié à au moins une bande de données, qui contient les données concernant le réseau routier détecté, des données relatives aux véhicules soumis au péage et/ou des données de taxes.

2. Dispositif selon la revendication 1,
**caractérisé en ce qu'**
une banque de données est prévue pour associer des taxes à des charges différentes de véhicules.

3. Dispositif selon l'une quelconque des revendications précédentes,
**caractérisé par**
une banque de données qui contient des données de taxes dépendant des données de trajets, des données de véhicules, des données spécifiques à la charge et/ou des données spécifiques à la durée.

4. Dispositif selon l'une quelconque des revendications précédentes,
**caractérisé en ce que**
la banque de données est prévue localement de manière séparée au niveau de chaque terminal.

5. Dispositif selon l'une quelconque des revendications précédentes,
**caractérisé en ce que**
la mémoire de la banque de données est un lecteur de disque compact.

6. Dispositif selon l'une quelconque des revendications précédentes,
**caractérisé en ce que**
le programme de fonctionnement est prévu sur le même support de données que la banque de données.

7. Dispositif selon l'une quelconque des revendications précédentes,
**caractérisé en ce que**
le terminal comporte une installation de lecture de cartes pour lire des cartes magnétiques ou des cartes à puce et
des moyens d'initialisation sont prévus pour initialiser le terminal (6, 7), qui comporte des moyens pour détecter l'association de chaque terminal (6, 7) à une ou plusieurs cartes d'utilisateurs sous la forme de cartes magnétiques ou de cartes à puce,
des moyens pour établir l'association entre les données caractéristiques respectives du terminal (6, 7) et la carte d'utilisateur, à chaque première mise en route du terminal (6, 7) dans le calculateur central (18).

8. Dispositif selon l'une quelconque des revendications précédentes,
**caractérisé en ce que**
les moyens pour réaliser une association comportent des moyens pour générer une identité de terminal dans le calculateur central (18) à partir des données caractéristiques d'une carte d'utilisateur, et des moyens pour mémoriser l'identité du terminal dans la mémoire du terminal correspondant.

9. Dispositif selon l'une quelconque des revendications précédentes,
**caractérisé par**
une initialisation de l'appareil de prélèvement de taxes (1) à l'aide d'une carte d'utilisateur associée à chaque fin de journée et/ou de changement d'équipe de personnel de service au poste de prélèvement de taxes et/ou en cas de coupure de courant et/ou après un certain intervalle de temps sans utilisation de l'appareil de prélèvement de taxes.

10. Dispositif selon l'une quelconque des revendications précédentes,
**caractérisé par**
des moyens de communication pour communiquer entre le calculateur central (18) et un terminal (6, 7) de façon que le terminal (6, 7), après l'établissement d'une liaison, ne puisse envoyer aucune donnée sans information du calculateur central (18).

11. Dispositif selon l'une quelconque des revendications précédentes,
**caractérisé en ce que**
la réserve de papier et/ou l'alimentation en papier de l'imprimante (15) de l'appareil de prélèvement de taxes (1) peut être fermée.

12. Dispositif selon l'une quelconque des revendications précédentes,
**caractérisé par**
des moyens pour couper l'imprimante (15) après une impression.

13. Dispositif selon l'une quelconque des revendications précédentes,
**caractérisé en ce que**
l'appareil de prélèvement de taxes (1) comporte deux imprimantes (15).

14. Dispositif selon l'une quelconque des revendications précédentes,
**caractérisé par**
des moyens pour comptabiliser la transaction seulement après la fin de l'impression d'un reçu de taxe et d'un document de contrôle.

15. Dispositif selon l'une quelconque des revendications précédentes,
**caractérisé par**
des moyens de contrôle pour interroger l'appareil de prélèvement de taxes (1) au niveau du calculateur central (18) et autoriser ou bloquer une transaction par le calculateur central (18) en cas de dépassement de montant d'une ou plusieurs transactions par rapport à une limite de montant prédéterminée.

16. Dispositif selon l'une quelconque des revendications précédentes,
**caractérisé par**
des moyens pour charger les programmes et/ou des données dans le terminal (6, 7) de l'appareil de prélèvement de taxes (1) par le calculateur central (18).

17. Dispositif selon l'une quelconque des revendications précédentes,
**caractérisé en ce que**
la transmission de données se fait de manière codée.

18. Dispositif selon l'une quelconque des revendications précédentes,
**caractérisé par**
des moyens pour bloquer une transaction qui autorisent un blocage seulement dans un intervalle de temps prédéterminé à partir de l'instant de la comptabilisation de la transaction.

19. Dispositif selon l'une quelconque des revendications précédentes,
**caractérisé en ce que**
le terminal (6, 7) de l'appareil de prélèvement de taxes (1) comporte des moyens pour détecter automatiquement des périphériques raccordés (4a-g).

20. Dispositif selon l'une quelconque des revendications précédentes,
**caractérisé par**
une partie mobile (7) avec un clavier (41, 10), une mémoire (3), une unité centrale CPU (2) et une installation de lecture de cartes.

21. Dispositif selon l'une quelconque des revendications précédentes,
**caractérisé par**
une station de base avec un appareil de chargement pour la partie mobile (7), des moyens de contrôle étant prévus pour assurer un bon appui de la partie mobile sur la station de base.

22. Dispositif selon l'une quelconque des revendications 20 ou 21,
**caractérisé en ce que**
la partie mobile (7) comporte en plus de l'accu une batterie tampon.

23. Dispositif selon l'une quelconque des revendications 20 ou 21,
**caractérisé par**
des moyens pour appliquer des caractéristiques de validité sur un modèle de vignette adhésive.

24. Dispositif selon la revendications 23,
**caractérisé en ce que**
les moyens pour appliquer les caractéristiques de validité comportent des moyens de poinçonnement.

25. Dispositif selon l'une quelconque des revendications 23 et 24,
**caractérisé en ce que**
différentes caractéristiques de validité peuvent être appliquées de manière commandée sélectivement.

26. Dispositif selon l'une quelconque des revendications 23 à 25,
**caractérisé par**
au moins une roue à caractères pour matricer des images alphanumériques.

27. Dispositif selon l'une quelconque des revendications 23 à 26,
**caractérisé par**
au moins une broche de matriçage pour poinçonner des champs caractéristiques spécifiques.

28. Dispositif selon l'une quelconque des revendications 23 à 27,
**caractérisé par**
des moyens pour coller une feuille après l'application des caractéristiques de validité.

29. Dispositif selon l'une quelconque des revendications 23 à 28,
**caractérisé par**
des moyens de saisie électronique de données de vignettes codées se trouvant sur un modèle de vignette.

30. Dispositif selon l'une quelconque des revendications 23 à 29,
**caractérisé par**
des moyens pour associer une caractéristique prévue sur le modèle de vignette aux caractéristiques de validité appliquées lors de l'émission.

31. Dispositif selon l'une quelconque des revendications 23 à 30,
**caractérisé en ce que**
les caractéristiques de validité et les données caractéristiques d'un modèle de vignette sont saisies et appelées de manière centrale.

32. Dispositif selon l'une quelconque des revendications 23 à 31,
**caractérisé en ce que**
les données des caractéristiques de validité ainsi que la caractéristique associée du modèle de vignette peuvent être appelées par un terminal et/ou une partie mobile selon l'une quelconque des revendications précédentes.

33. Dispositif selon l'une quelconque des revendications 23 à 32,
**caractérisé en ce que**
les moyens pour appliquer les caractéristiques de validité sont intégrés dans un terminal et/ou dans une partie mobile selon l'une des revendications précédentes.

34. Dispositif selon l'une quelconque des revendications 23 à 33,
**caractérisé par**
des moyens pour introduire des critères dé sélection pour la sélection de caractéristiques de validité destinées à être apposées sur un modèle de vignette.

35. Dispositif selon la revendication 34,
**caractérisé par**
des moyens pour introduire des critères de sélection comprenant un clavier, un terminal et/ou une partie mobile selon l'une quelconque des revendications précédentes.

36. Application du dispositif pour prélever des taxes d'utilisation routière (taxes de péage) selon l'une quelconque des revendications précédentes pour prélever des taxes d'utilisation routière dépendant du trajet, du véhicule, de la charge et/ou du temps.
